# EUROPEAN PATENT SPECIFICATION

(11) **EP 1 790 560 B1**
(45) Date of publication and mention of the grant of the patent: **19.08.2009**
(21) Application number: 06024407.6
(22) Date of filing: 24.11.2006
(51) Int. Cl.: B62K 11/04, F02M 35/16

(54) **Straddle-type vehicle**
Spreitzsitz-Fahrzeug
Véhicule du type monté à califourchon

(30) Priority: 25.11.2005 JP 2005340814
(43) Date of publication of application: 30.05.2007
(60) Divisional application: 09000658.6
(73) Proprietor: Yamaha Hatsudoki Kabushiki Kaisha, Iwata-shi, Shizuoka-ken 438-8501 (JP)
(72) Inventor: Tsuya, Koji, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 515 037
- EP-A1- 1 553 013
- JP-A- 9 002 361
- US-A1- 2003 010 558
- US-A1- 2004 040 958

## Description

The present invention relates to a straddle-type vehicle, in particular a motorcycle, according to the preamble of claim 1. Such a vehicle is known from US 2003/0010558.

In some motorcycles, the front part as well as the left and right sides of an engine installed on a body frame are enclosed by a cowling. Regarding the intake system on this type of motorcycle, it is a general practice that a duct extending forward is connected to the air cleaner supplying the filtered air to the engine, and the duct is connected to the opening formed on the front face of the cowling, to make the running wind introduced into the air cleaner via the duct (Patent Document 1, for example).

On the other hand, when the structure enclosing the front part as well as the left and right sides of the engine by the cowling is employed, the temperature inside the cowling can rise easily due to the heat from the engine, possibly causing troubles resulting from the thermal damage on the in-vehicle parts. This is why the air introduction port is formed on the cowling for introducing the running air by the air introduction port to cool down the in-vehicle parts.
Patent Document 1: JP-A-2000-85664

By the way, there is a concern that the structure simply introducing the running wind from the introduction port on the cowling, like the structure employed by the conventional motorcycle, cannot attain the adequate air flow within the cowling, and cannot cool down the in-vehicle parts efficiently.

Here, it would be possible to connect the special cooling duct to the air introduction port on the cowling, and supply cooling air to the in-vehicle parts via the cooling duct. However, this will lead to the concerns that the additional layout space for the cooling duct can hardly be secured, and the required number of parts will be increased and structure will become complicated as the special cooling duct is disposed.

The present invention has been made in light of the actual traditional conditions described above. It Is, therefore, an object of the present invention to provide a straddle-type vehicle, in particular a motorcycle, that allows effective cooling of in-vehicle parts without adding any special cooling duct.

This objective is solved in an inventive manner by a straddle-type vehicle, in particular a motorcycle, according to claim 1. A motorcycle according to the present invention comprises: a body frame; an engine installed on the body frame; and an intake system supplying air to the engine; whereby a parts cooling system diverges air from the intake system of the engine, and uses the diverged air to cool in-vehicle parts disposed in the vicinity of the engine.

Preferably, the parts cooling system comprises a diverging air port, which is opened to a cooling air flow channel guiding the diverged air from the intake system of the engine to the in-vehicle parts to be cooled.

Further, the intake system of the engine includes an air cleaner connected to a cylinder head of the engine and having a filtering element for filtering the air, and an air duct for drawing-in the air from an opening formed in a front part of the motorcycle for introducing air into the air cleaner.

Yet further, preferably the parts cooling system is configured to diverge the air at the upstream side of the filtering element.

Preferably, a cover for covering the air cleaner from above, wherein the parts cooling system is constructed to make the diverging air flow between the air cleaner and the cover.

The in-vehicle parts include electrical parts disposed above the air cleaner with a gap defined between the electrical parts and the air cleaner, wherein the parts cooling system is constructed to make the diverging air flow through the gap between the air cleaner and the electrical parts.

Preferably, the in-vehicle parts include the electrical parts disposed above the air cleaner with the gap defined between the electrical parts and the air cleaner, wherein the cover for covering the electrical parts and the air cleaner from above comprises at least one air discharge port formed therein, and wherein the parts cooling system is constructed to make the diverging air flow rearward through the gap between the air cleaner and the electrical parts, and then flow forward through the gap between the electrical parts and the cover to flow out from the at least one air discharge port.

According to a yet another preferred embodiment, the straddle-type vehicle further comprises: a fuel tank disposed in the rear of the intake system and above the engine; and an electric generator disposed at a back side of the engine opposing to the fuel tank, wherein the parts cooling system is constructed to make the diverging air flow through a gap formed between the fuel tank and the engine, and then flow in the vicinity of the electric generator.

Preferably, the body frame has a head pipe supporting a front fork, and left and right tank rails connected to the head pipe, wherein the air duct in the intake system of the engine connecting the opening at the front part of the motorcycle to the air cleaner is disposed to pass through a duct hole penetrating the connecting portion of the head pipe and the tank rails.

Further, preferably the engine is a multi-cylinder engine, the intake system is disposed to connect the air cleaner to the engine, a throttle body containing a throttle valve is provided for each cylinder respectively, and the parts cooling system is constructed to make the diverging air flow through each gap defined between the throttle bodies.

In the following, the present invention is explained in greater detail with respect to several embodiments thereof in conjunction with the accompanying drawings, wherein:
- FIG. 1: is a side view of a motorcycle according to an embodiment,
- FIG. 2: is a side view of a parts cooling system on the motorcycle in FIG. 1,
- FIG. 3: is a schematic view of the parts cooling system in FIG. 2, when viewed from the rear thereof,
- FIG. 4: is a schematic view of the parts cooling system in FIG. 2, when viewed from the top, and
- FIG. 5: is a top plan view of a parts cooling system according to another embodiment.

### Description of Reference Numerals:

1: motorcycle
1a: body frame
2: head pipe
3: tank rail
3b: duct hole
8: front fork
15: fuel tank
17: top cover
17a: air discharge port
18: cowling
18c: opening
20: engine
24: cylinder head
30: alternator (electric generator)
36: throttle body
36a: throttle valve
37: air cleaner
37d, 37d': diverged air port
38: air duct
39: element
43 through 45: electrical parts (in-vehicle parts)
a, b, c: diverged air
s1 through s4: gap

An embodiment is described with reference to the attached drawings, in which:

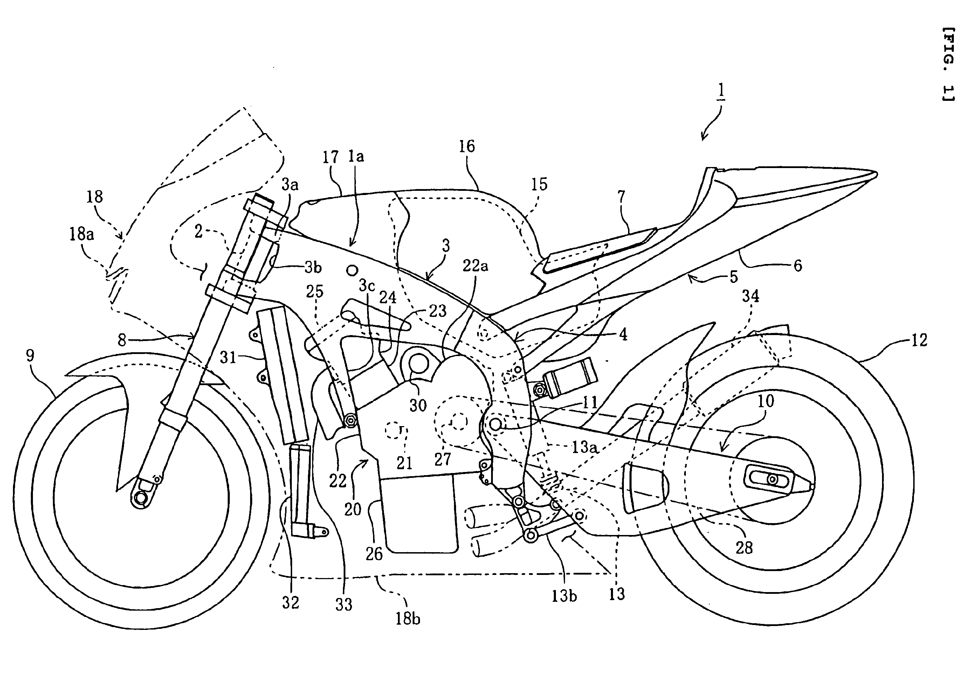

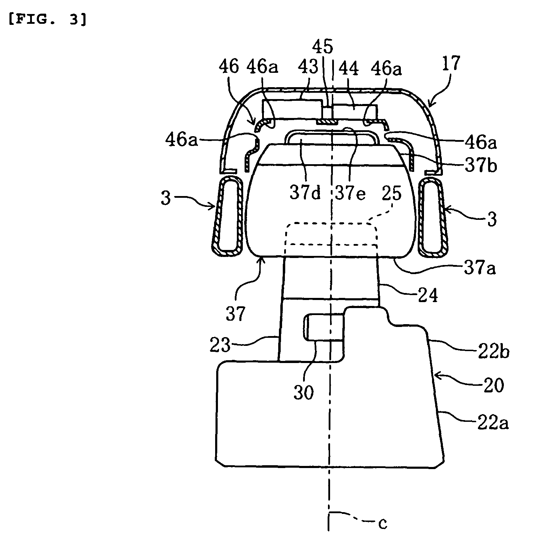

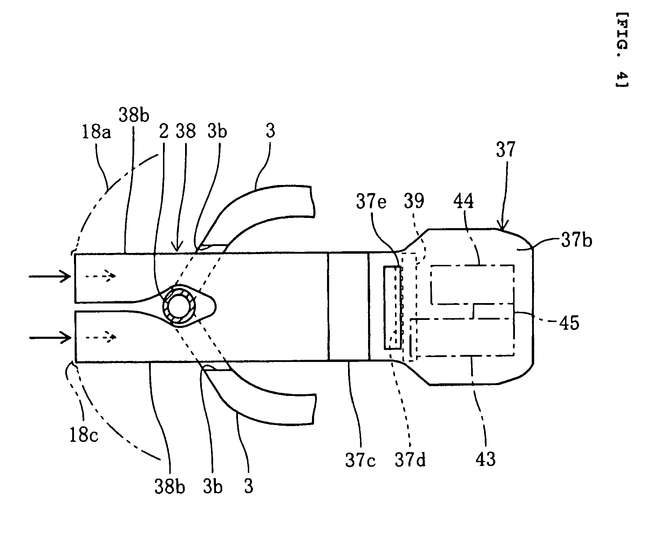

FIGs. 1 through 4 illustrate a motorcycle according to an embodiment. Additionally, the terms "right," "left," "front" and "rear" used in this embodiment refer to the right, left, front and rear sides viewed from a rider seated on the seat.

In the drawings, reference numeral 1 denotes a motorcycle having a general structure that a front wheel 9 and a rear wheel 12 are disposed in front of and in the rear of a body frame 1 a, respectively, with an engine 20 being suspendingly supported beneath the body frame 1 a, and that the body frame 1 a is covered with a cowling 18 in the areas forward, on the left side, and on the right side of the engine 20.

The body frame 1 a has a head pipe 2, left and right tank rails 3, 3, extending slantingly downward from the head pipe 2 to the rear of the vehicle, and rear arm bracket 4, 4, extending downward from the rear ends of the left and right tank rails 3,3, respectively. Further, a seat 5 is mounted on the left and right rear arm brackets 4,4.

The seat 5 has a seat frame 6 mounted to the upper end part of the rear arm brackets 4, 4 and extending slantingly upward to the rear of the vehicle, and a seat cushion 7 disposed on the seat frame 6.

A front fork 8 is pivotally supported by the head pipe 2 so that it can be steered to both sides. A front wheel 9 is rotatably supported by the lower end of the front fork 8, a steering handlebars (not shown) are mounted to the upper end of the front fork 8.

A rear arm 10 is supported by the vertical center part of the left and right rear arm brackets 4 in the vertically swingable manner via a pivot shaft 11. A rear wheel 12 is rotatably supported by the rear end of the relevant rear arm 10. A rear suspension 13 having a cushion unit 13a and a linkage 13b is disposed between the rear arm 10 and the left and right rear arm brackets 4, 4.

A fuel tank 15 is installed between the left and right tank rails 3, 3. The fuel tank 15 is disposed above and in the rear of the engine 20, with most of its part being protruded upward from the left and right tank rails 3, 3.

The fuel tank 15 is provided with a tank cover 16 that spreads over the fuel tank 15. In addition, the area forward of the fuel tank 15 between the left and right tank rails 3, 3 is covered from above by means of a top cover 17.

The tank cover 16 is attached to the fuel tank 15. The top cover 17, independent of the tank cover 16, is installed detachably on the tank cover 16.

The left and right tank rails 3, 3 are formed to have the larger vertical dimension than the transversal dimension to make vertically long rectangular in the cross sectional view. In the vicinity of the head pipe 2, the left and right tank rails 3, 3 are formed in the manner that the distance in the vehicle's transverse direction between them becomes smaller as it comes closer to the head pipe 2, and its forward end 3a is joined to the head pipe 2 by means of welding. In addition, an under frame part 3c is formed integrally in the forward part of the left and right tank rails 3, 3, to extend downwardly to the rear running along the side of the engine 20.

The cowling 18 has a front part 18a covering the forward part of the head pipe 2, a side parts 18b, 18b covering the left side and right side of the engine 20 spreading downward from the lower edge of the left and right tank rails 3, 3. An opening 18c is formed on the front part 18a to introduce the running wind into the cowling 18.

The engine 20 is a water-cooled four-stroke-cycle engine of parallel 4-cylinder type. The engine 20 has a structure in which a crankcase 22 accommodating a crankshaft 21 is joined with tightening bolts to a cylinder block 23 common to every cylinder, a cylinder head 24, and a head cover 25, which are stacked on top of the upper mating face of the crankcase 22, while the lower mating face of the crankcase 22 is connected to an oil pan 26.

A transmission case 22a containing a transmission (not shown) is formed integrally in the rear of the crankcase 22. An output shaft 27 for taking out the engine rotation is disposed at the transmission case 22a, and the rear wheel 12 is driven rotationally by the output shaft 27 via a chain 28.

Upper and lower radiators 31, 32 are disposed forward of the engine 20 to maintain the engine cooling water at the predetermined temperature.

An alternator (electric generator) 30 is disposed in the back of the engine 20. The alternator 30 is positioned opposing to the bottom of the fuel tank 15, and on the vehicle's centerline "C". In addition, the alternator 30 is attached to the inner side wall of the transmitting part 22b swelling out upwardly from the transmission case 22a in the manner that the alternator 30 is exposed outward. Then, the alternator 30 is driven rotationally by the crankshaft 27 via the transmission system disposed inside of the transmitting part 22b.

Exhaust system of the engine 20 has four exhaust pipes 33 joined in communication with exhaust ports 24a formed for each cylinder on the forward wall of the cylinder head 24, extending downward from the forward wall of the cylinder head 24 to run below the engine 20, and further extending to the rear of the vehicle, as well as a muffler 34 connected to each of the exhaust pipes 33 and disposed on the right side of the rear wheel 11.

Intake system of the engine 20 has four throttle bodies 36 joined in communication with intake ports 24b formed for each cylinder on the rear wall of the cylinder head 24 and extending upward generally in the vertical direction with a throttle valve 36a contained in it, and a common air cleaner 37 connected to the throttle bodies 36, as well as an air duct 38 for introducing the air into the air cleaner 37.

Each of the throttle bodies 36 is equipped with a fuel injection valve 40. The fuel injection valve 40 is disposed so that the injection orifice 40a is pointing at the axial line of the intake ports 24b.

The air cleaner 37 has a cleaner box 37a, and an element 39 composed of a filtering media disposed to define the first chamber and the second chamber inside the cleaner box 37a. The cleaner box 37a is disposed in between the left and right tank rails 3, 3, taking the shape of a wide box protruding upward from the left and right tank rails 3, 3. Also, an introduction part 37c is formed integrally in the upper part of the front wall on the cleaner box 37a, protruding forward from there, and a lid member 37b is mounted detachably to the upper end opening on the cleaner box 37a that is extending over the introduction part 37b. Note that the element 39 is disposed near the boundary of the cleaner box 37a and the introduction part 37c. Each of the throttle bodies 36 is joined in communication with the bottom wall of the cleaner box 37a.

The air cleaner 37 is disposed above the engine 20 and in front of the fuel tank 15, to form a gap s1 between the rear wall of the air cleaner 37 and the front wall of the fuel tank 15. Also, the upper part of the air cleaner 37 is covered with a top cover 17. It is constructed to allow the replacement of the element 39 by removing the top cover 17 and then detaching the lid member 37b.

The air duct 38 is made of plastic of smaller heat conductivity, and is branched into Y-shape in the upper stream part. A downstream end part 38a of the air duct 38 is joined to the introduction part 37c, while the left and right branched parts 38b, 38b branched into Y-shape is joined to the opening 18c formed at the front end of the cowling 18.

Left and right duct holes 3b, 3b are penetratingly formed in the fore-and-aft direction at the connecting part of the left and right tank rails 3, 3 to the head pipe 2. The left and right branched parts 38b, 38b of the air duct 38 run through the left and right duct holes 3b, 3b, and then connected to the opening 18c of the cowling 18

The running wind flowing-in through the opening 18c is introduced into the air cleaner through the air duct 38, filtered by the element 39, and delivered to the inner part of the intake ports 24b after passing through each of the throttle bodies 36.

Electrical parts, such as an ECU 43 for controlling the fuel injection amount and injection timing of the fuel injection valve 40 based on the operating conditions of the engine 20, a regulator 44 for adjusting the amount of current generated and supplied by the alternator 30, and an amplifier 45 for amplifying the detected values from the O₂ sensor (not shown) attached to the exhaust pipes 33 and output them to the ECU43, are disposed in parallel in vehicle's transverse direction inside the top cover 17.

These electrical parts 43 through 45 are mounted to a supporting bracket 46 generally taking the shape of gate and supported by the body frame 1a. Plural cooling holes 46a are formed in such part of the supporting bracket 46 that faces to each of the electrical parts 43 through 45. It is constructed to allow maintenance works on each of the electrical parts 43 through 45 by removing the top cover 17.

Each of the electrical parts 43 through 45 is disposed to provide a predetermined gap s2 below the top cover 17, and to provide a predetermined gap s3 above the lid member 37b of the air cleaner 37. Also, each of the electrical parts 43 through 45 is disposed to provide a predetermined gap s4 forward of the fuel tank 15.

A parts cooling system is provided above the engine 20 in the manner that it makes the air coming from the intake system diverge, and introduces the split or diverge air a, b, to the alternator 30 and each of the electrical parts 43 through 45 disposed in the vicinity of the engine 20. The parts cooling system has a main cooling flow channel "A" for introducing the air to the area around the alternator 30, and a secondary cooling flow channel "B" for introducing the air to the area around the electrical parts 43 through 45. Detailed structure is described in the following sections.

A diverging air port 37d, opening to face the gap s3 lying between the lid member 37b and the electrical parts 43 through 45, is formed on the lid member 37b of the air cleaner 37. The diverging air port 37d is formed at the front end of the lid member 37b, and in the vicinity of the element 39 at its upstream side.

An appentice part 37e, extending to cover the diverging air port 37d in the forward part and above, is formed at the front edge of the diverging air port 37d. The air flow diverging through by the diverging air port 37d is directed to flow rearward through the gap s3 by the appentice part 37e.

Plural air discharge ports 17a are formed at the left and right side of the top cover 17 near the front end. Each of the air discharge ports 17a is located forward of each of the electrical parts 43 through 45, and is exposed outward on both sides above the cowling 18.

Meanwhile, the main cooling flow channel "A" is constructed to make the air diverged through the diverging air port 37d flow rearward through the gap s3 between the lid member 37b and the electrical parts 43 through 45, hit the fuel tank 15 to flow downward through the gap s1 between the fuel tank 15 and the air cleaner 37, and flow along the bottom part of the fuel tank 15 in the vicinity of the alternator 30. The lower part of each of the electrical parts 43 through 45, the bottom part of the fuel tank 15, and the alternator 30 are cooled by the air a flowing through the main cooling flow channel A.

On the other hand, the secondary cooling flow channel "B" is constructed to make the air diverged by the diverged air port 37d flow rearward through the gap s3 to hit the fuel tank 15, and to make part of the air flow go upward through the gap S4 between the fuel tank 15 and the electrical parts 43 through 45, then flow forward through the gap S2 between the electrical parts 43 through 45 and the top cover 17, and discharged to the open air from the air discharge ports 17a on the top cover 17. The upper part of each of the electrical parts 43 through 45 and the upper part of the fuel tank 15 are cooled by the air "b" flowing through the secondary cooling flow channel "B".

According to the present embodiment, it provides a structure that the air "a" diverging through the diverging air port 37d of the air cleaner 37 flow in the vicinity of each of the electrical parts 43 through 45, and also flow in the vicinity of the alternator 30. This enables effective cooling of each of the electrical parts 43 through 45 and the alternator 30 by means of the air "a" diverging from the intake system. More specifically, the inside of the intake air passage formed by the air duct 38 and the introduction part 37c of the air cleaner 37 is kept under relatively high positive pressure because of the dynamical pressure exerted by the running wind, with the temperature being equivalent to the ambient air. Therefore, the adequate air flow can be obtained without providing any special cooling duct by branching out the parts cooling system from the intake air passage of the intake system. As a result, the cooling effect regarding each of the electrical parts 43 through 45 and the alternator 30 can be improved without causing the problems related to the layout space, the increased number of parts, and the complicated structure.

According to the present embodiment, the diverging air port 37d is formed in the upstream of the element 39 to allow diverging of the air at the point of highest dynamical pressure. Thus, the amount of air taken from the diverging air port 37d can be increased while maintaining the required amount of air to be supplied to the engine 20.

According to the present embodiment, it provides a structure that the diverging air flows rearward between the air cleaner 37 and the top cover 17. This enables to obtain the flow of diverging air in a more reliable manner. Since the self-heating ECU 43, regulator 44, and amplifier 45 are disposed in the reliable air flow running between the air cleaner 37 and the top cover 17, each of the electrical parts 43 through 45 can be cooled down positively, and the rise in temperature of these parts can be restrained.

The gap s3 is created above the air cleaner 37 to dispose each of the electrical parts 43 through 45 in it, and the gap s2 is provided between each of the electrical parts 43 through 45 and the top cover 17, with the air discharge port 17a being formed additionally on the top cover 17. This makes the air diverging from the diverging air port 37d flow rearward through the gap s3 to hit the fuel tank 15, go upward through the gap s4 between the fuel tank 15 and the electrical parts 43 through 45, flow forward through the gap s2 to be discharged from the air discharge ports 17a. Thus, each of the electrical parts 43 through 45 is cooled down altogether by the air "b" flowing as if it encloses the periphery of the electrical parts 43 through 45 on the lower side and the upper side, and the cooling efficiency can be improved further. More specifically, since the air flow rate around the external surface of the top cover 17 is high while the motorcycle is running, negative pressure is exerted on the air discharge ports 17a. On the other hand, the positive pressure is exerted in the space between the air cleaner 37 and the top cover 17, because the diverging air is flowing in. Thus, the air flow that runs as if it wraps around each of the electrical parts 43 through 45 from the lower part to the upper part is formed.

In addition, it provides a structure that the diverging air flows to the alternator 30 after passing through the gap s1 between the air cleaner 37 and the fuel tank 15. This allows the reliable cooling of the alternator in spite of the fact that the alternator 30 having large heating value is disposed in the back of the engine 20.

According to the present embodiment, the duct hole 3b is formed at the connecting part of the left and right tank rails 3, 3 to the head pipe 2, and the air duct 38 connected to the opening 18c of the cowling 18 is inserted through the duct hole 3b. This allows the prevention of the rise in the intake air temperature. More specifically, in the case holes are made on the tank rails and the holes themselves are utilized as part of the air duct, for instance, the tank rails can easily reach a high temperature due to the heat from the engine, and thus it is concerned that the intake air temperature will rise to deteriorate the filling efficiency. According to the present embodiment, the rise in the intake air temperature can be restrained because the air duct 38 made of carbon passes through the duct hole 3b.

Note that in the embodiment described above, the diverging air port 37d is formed in the vicinity of the element 39 at its upstream side. According to the present teaching, however, the diverging air port may be formed at the downstream side of the element 39.

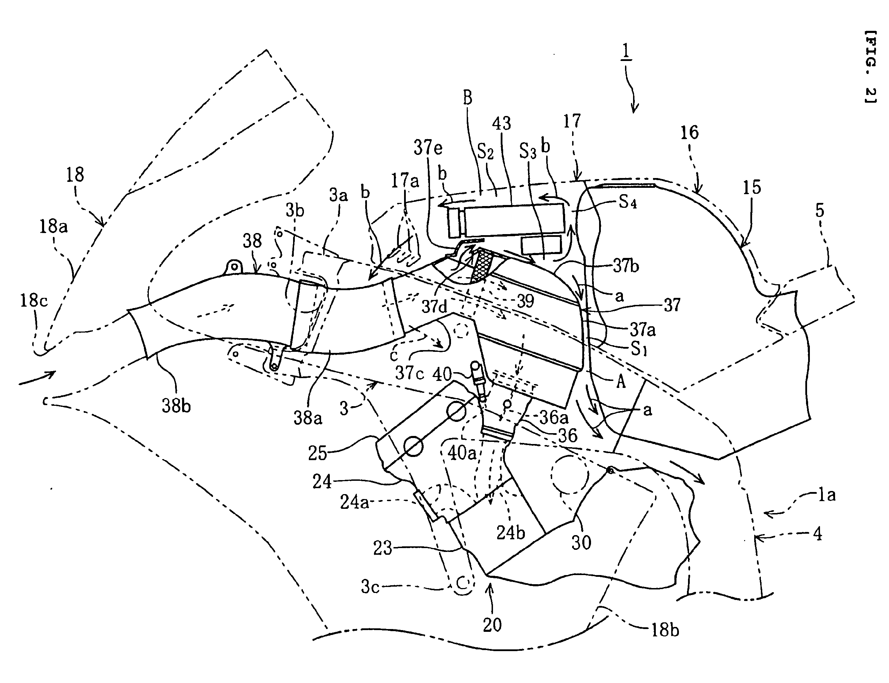

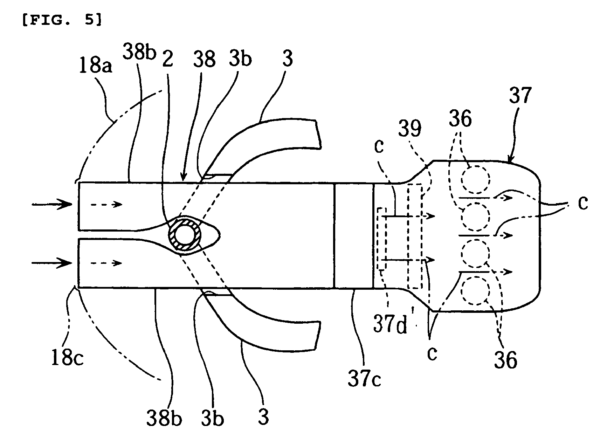

Also note that in the embodiment described above, the diverging air port 37d is formed at the front end of the lid member 37 that constitutes the upper wall of the air cleaner to make the diverging air flow in the upper part of the air cleaner. According to the present teaching, however, the diverging air port 37d' may be formed, for instance, on the lower wall of the introduction port 37c as shown in FIGs. 2 and 5 to make the air "c" diverging through the diverging air port 37d', and make the air "c" flow to the alternator 30 through the gap between each of the throttle bodies 36. In this case, the fuel injection valve 40, the throttle bodies 36, and the alternator 30 can be cooled down effectively.

The description above discloses (amongst others), an embodiment of a motorcycle including a body frame, an engine installed on the body frame, and an intake system for supplying air to the engine, wherein there is provided a parts cooling system for making the air diverged from the intake system, and introducing the diverging air to the in-vehicle parts disposed in the vicinity of the engine.

According to the motorcycle of this embodiment, the air diverging from the intake system is supplied to the in-vehicle parts located in the vicinity of the engine. Thus, the in-vehicle parts can be cooled down efficiently by the diverging air flow. More specifically, inside of the intake air passage is kept under relatively high positive pressure because of the dynamical pressure exerted by the running wind, and the temperature is low. Therefore, the adequate air flow can be obtained without providing any special cooling duct by branching out the parts cooling system from the engine intake system. As a result, the cooling effect for the in-vehicle parts can be improved without causing the problems related to the layout space, the increased number of parts, and the complicated structure.

Further, the description discloses, according to a first preferred aspect, a motorcycle comprising: a body frame; an engine installed on the body frame; and an intake system for supplying air to the engine; wherein there is provided a parts cooling system for making the air diverge from the intake system, and introducing the diverging air to in-vehicle parts disposed in the vicinity of the engine.

Further, according to a second preferred aspect, the intake system includes an air cleaner connected to the cylinder head of the engine and having an element for filtering the air, and an air duct for drawing-in the air from an opening formed in the front part of the motorcycle and for introducing the air into the air cleaner, and wherein the parts cooling system makes the air diverge at the upstream side of the element.

Further, according to a third preferred aspect, there is provided a cover for covering the air cleaner from above, and the parts cooling system is constructed to make the diverging air flow between the air cleaner and the cover.

Further, according to a fourth preferred aspect, the in-vehicle parts include electrical parts disposed above the air cleaner with a gap defined between the electrical parts and the air cleaner, and the parts cooling system is constructed to make the diverging air flow through the gap between the air cleaner and the electrical parts.

Further, according to a fifth preferred aspect, the motorcycle further comprises: a fuel tank disposed in the rear of the intake system and above the engine; and an electric generator disposed at the back of the engine opposing to the fuel tank, wherein the parts cooling system is constructed to make the diverging air flow through the gap formed between the fuel tank and the engine, and then flow in the vicinity of the electric generator.

Further, according to a sixth preferred aspect, the in-vehicle parts include electrical parts disposed above the air cleaner with a gap defined between the electrical parts and the air cleaner, there is provided a cover for covering the electrical parts and the air cleaner from above, the cover having air discharge ports formed therein, and the parts cooling system is constructed to make the diverging air flow rearward through the gap between the air cleaner and the electrical parts, and then flow forward through the gap between the electrical parts and the cover to flow out from the air discharge ports.

Further, according to a seventh preferred aspect, the engine is a multi-cylinder engine, the intake system is disposed to connect the air cleaner to the engine, a throttle body containing a throttle valve is provided for each cylinder, and the parts cooling system is constructed to make the diverging air flow through each gap defined between throttle bodies.

Further, according to an eighth preferred aspect, the body frame has a head pipe supporting a front fork, and left and right tank rails connected to the head pipe, and an air duct in the intake system connecting the opening at the front part of the motorcycle to the air cleaner is disposed to pass through a duct hole penetrating the connecting portion of the head pipe and the tank rails.

Further, the description above discloses, as a particularly preferred embodiment, in order to provide a motorcycle that allows effective cooling of in-vehicle parts without using any special cooling duct, an embodiment of a motorcycle having a body frame 1 a, an engine 20 installed on the body frame 1a, and an intake system for supplying air to the engine 20, wherein there is provided a parts cooling system for making the air diverge from the intake system, and introducing the diverging air "a" to in-vehicle parts such as electrical parts 43 through 45 and an alternator 30 disposed in the vicinity of the engine.

## Claims

1. Straddle-type vehicle, in particular a motorcycle, comprising:
a body frame (1 a);
an engine (20) installed on the body frame (1a); and
an intake system supplying air to the engine (20);
a parts cooling system for diverging air (a, b, c) from the intake system of the engine, and for using the diverged air (a, b, c) to cool in-vehicle parts disposed in the vicinity of the engine (20);
wherein the intake system of the engine includes an air cleaner (37) connected to a cylinder head of the engine (20) and having a filtering element (39) for filtering the air, and an air duct (38) for drawing-in the air from an opening (18c) formed in a front part of the straddle-type vehicle for introducing air into the air cleaner; and
**characterized in that**
the in-vehicle parts include electrical parts (43 - 45) disposed above the air cleaner (37) with a gap (S3) defined between the electrical parts (43 - 45) and the air cleaner (37), wherein the parts cooling system is constructed to make the diverging air flow through the gap (S3) between the air cleaner (37) and the electrical parts (43 - 45).

2. Straddle-type vehicle according to claim 1, **characterized in that** the parts cooling system comprises a diverging air port (37d), which is opened to a cooling air flow channel (A, B) for guiding the diverged air from the intake system of the engine (20) to the in-vehicle parts to be cooled.

3. Straddle-type vehicle according to claim 1 or 2, **characterized in that** the parts cooling system is configured to diverge the air at the upstream side of the filtering element (39).

4. Straddle-type vehicle according to one of the claims 1 to 3, **characterized by** a cover (17) for covering the air cleaner (37) from above, wherein the parts cooling system is constructed to make the diverging air flow between the air cleaner (37) and the cover (17).

5. Straddle-type vehicle according to claim 4, **characterized in that** the in-vehicle parts include the electrical parts (43 - 45) disposed above the air cleaner (37) with the gap (S3) defined between the electrical parts (43 - 45) and the air cleaner (37), wherein the cover (17) for covering the electrical parts (43 - 45) and the air cleaner (37) from above comprises at least one air discharge port (17a) formed therein, and wherein the parts cooling system is constructed to make the diverging air flow rearward through the gap (S3) between the air cleaner (37) and the electrical parts (43 - 45), and then flow forward through the gap (S2) between the electrical parts (43 - 45) and the cover (17) to flow out from the at least one air discharge port (17a).

6. Straddle-type vehicle according to one of the claims 1 to 5, **characterized by** further comprising: a fuel tank (15) disposed in the rear of the intake system and above the engine (20); and an electric generator (30) disposed at a back side of the engine (20) opposing to the fuel tank (15), wherein the parts cooling system is constructed to make the diverging air flow through a gap (S1) formed between the fuel tank (15) and the engine (20), and then flow in the vicinity of the electric generator (30).

7. Straddle-type vehicle according to one of the claims 3 to 5, **characterized in that** the body frame has a head pipe (3a) supporting a front fork, and left and right tank rails (3, 3) connected to the head pipe (3a), wherein the air duct (38) in the intake system of the engine (20) connecting the opening (18c) at the front part of the straddle-type vehicle to the air cleaner (37) is disposed to pass through a duct hole penetrating the connecting portion of the head pipe and the tank rails (3, 3).

8. Straddle-type vehicle according to one of the claims 3 to 7, **characterized in that** the engine is a multi-cylinder engine, the intake system is disposed to connect the air cleaner to the engine, a throttle body containing a throttle valve is provided for each cylinder respectively, and the parts cooling system is constructed to make the diverging air flow through each gap defined between the throttle bodies.

## Patentansprüche

1. Fahrzeug vom Spreitzsitz- Typ, insbesondere ein Motorrad, aufweisend:
einen Karosserierahmen (1 a);
einen Verbrennungsmotor (20), installiert an dem Karosserierahmen (1 a); und
ein Einlasssystem, das Luft zu dem Verbrennungsmotor (20) zuführt;
ein Teile- Kühlsystem zum Ableiten von Luft (a, b, c) von dem Einlasssystem des Verbrennungsmotors und zum Verwenden der abgeleiteten Luft (a, b, c), um Teile im Fahrzeug, angeordnet in der Nähe des Verbrennungsmotors (20), zu kühlen; wobei das Einlasssystem des Verbrennungsmotors einen Luftreiniger (37) enthält, verbunden mit einem Zylinderkopf des Verbrennungsmotors (20), und das ein Filterelement (39) zum Filtern der Luft hat,
und einen Luftkanal (38) zum Einsaugen von Luft von einer Öffnung (18c), gebildet im vorderen Teil des Fahrzeuges vom Spreitzsitz- Typ, zum Einleiten von Luft in den Luftreiniger; und
**dadurch gekennzeichnet, dass**
die Teile im Fahrzeug elektrische Teile (43 - 45) sind, die oberhalb des Luftreinigers (37) mit einem Spalt (53) zwischen den elektrischen Teilen (43 - 45) und dem Luftreiniger (37) angeordnet sind, wobei das Teile- Kühlsystem aufgebaut ist, den abgeleiteten Luftstrom zu veranlassen, durch den Spalt (S3) zwischen dem Luftreiniger (37) und den elektrischen Teilen (43 - 45) zu strömen.

2. Fahrzeug vom Spreitzsitz- Typ nach Anspruch 1, **dadurch gekennzeichnet, dass** das Teile- Kühlsystem eine Luftöffnung (37d) für die abgeleitete Luft aufweist, die zu einem Kühlluft- Strömungskanal (A, B) geöffnet ist, um die abgeleitete Luft von dem Einlasssystem des Verbrennungsmotors (20) zu den zu kühlenden Teilen im Fahrzeug zu leiten.

3. Fahrzeug vom Spreitzsitz- Typ nach Anspruch 1 oder 2, **dadurch gekennzeichnet, dass** das Teile- Kühlsystem konfiguriert ist, die Luft auf der stromaufwärtigen Seite des Filterelements (39) zu abzuleiten.

4. Fahrzeug vom Spreitzsitz- Typ nach einem der Ansprüche 1 bis 3, **gekennzeichnet durch** eine Abdeckung zum Abdecken des Luftreinigers (37) von oben, wobei das Teile- Kühlsystem aufgebaut ist, den abgeleitenden Luftstrom zu veranlassen, zwischen dem Luftreiniger (37) und der Abdeckung (17) zu strömen.

5. Fahrzeug vom Spreitzsitz- Typ nach Anspruch 4, **dadurch gekennzeichnet, dass** die Teile im Fahrzeug die elektrische Teile (43 - 45) enthalten, angeordnet oberhalb des Luftreinigers (37) mit dem Spalt (S3), gebildet zwischen den elektrische Teilen (43 - 45) und dem Luftreiniger (37), wobei die Abdeckung (17) zum Abdecken der elektrischen Teile (43 - 45) und des Luftreinigers (37) von oben zumindest einen darin gebildete Luftauslassöffnung (17a) aufweist, und wobei das Teile- Kühlsystem aufgebaut ist, den abgeleitenden Luftstrom zu veranlassen, nach hinten durch den Spalt (S3) zwischen dem Luftreiniger (37) und den elektrischen Teilen (43 - 45) zu strömen, und anschließend nach vorn durch den Spalt (S2) zwischen den elektrischen Teilen (43 - 45) und der Abdeckung (17) zu strömen, um, anschließend aus der zumindest einen Luftauslassöffnung (17a) zu strömen.

6. Fahrzeug vom Spreitzsitz- Typ nach einem der Ansprüche 1 bis 5, **gekennzeichnet durch** außerdem aufweisend: einen Kraftstofftank (15), angeordnet rückwärts des Einlasssystems und oberhalb des Verbrennungsmotors (20); und einen elektrischen Generator (30), angeordnet auf einer Rückseite des Verbrennungsmotors (20) gegenüberliegend zu dem Kraftstofftank (15), wobei das Teile- Kühlsystem aufgebaut ist, den abgeleitenden Luftstrom zu veranlassen, **durch** einen Spalt (S1), gebildet zwischen dem Kraftstofftank (15) und dem Verbrennungsmotor (20), zu strömen und anschließend in die Nähe des elektrischen Generators (30) zu strömen.

7. Fahrzeug vom Spreitzsitz- Typ nach einem der Ansprüche 3 bis 5, **dadurch gekennzeichnet, dass** der Karosserierahmen ein Kopfrohr (3a) hat, das eine Vordergabel lagert, und linke und rechte Tankschienen (3, 3), verbunden mit dem Kopfrohr (3a), wobei der Luftkanal (38) in dem Einlasssystem des Verbrennungsmotors (20), der die die Öffnung (18c) an dem vorderen Teil des Fahrzeuges vom Spreitzsitz- Typ mit dem Luftreiniger (37) verbindet, vorgesehen ist, durch eine Kanalöffnung hindurchzugehen, die den Verbindungsabschnitt des Kopfrohres und die Tankschienen (3, 3) durchdringt.

8. Fahrzeug vom Spreitzsitz- Typ nach einem der Ansprüche 3 bis 7, **dadurch gekennzeichnet, dass** der Verbrennungsmotor ein Mehrfachzylinder- Verbrennungsmotor ist, wobei das Einlasssystem vorgesehen ist, den Luftreiniger mit dem Verbrennungsmotor zu verbinden, wobei ein Drosselkörper, der ein Drosselventil enthält, jeweils für jeden Zylinder vorgesehen ist, und das Teile- Kühlsystem aufgebaut ist, den abgeleitenden Luftstrom zu veranlassen, durch jeden Spalt, gebildet zwischen den Drosselkörpern, zu strömen.

## Revendications

1. Véhicule de type monté à califourchon, en particulier une motocyclette, comprenant :
un châssis de carrosserie (1a) ;
un moteur (20) installé sur le châssis de carrosserie (1a) ; et
un système d'admission fournissant de l'air au moteur (20) ;
un système de refroidissement de pièces pour dévier l'air (a, b, c) du système d'admission du moteur, et pour utiliser l'air dévié (a, b, c) pour refroidir des pièces dans le véhicule disposées au voisinage du moteur (20) ;
dans lequel le système d'admission du moteur comprend un filtre à air (37) connecté à une culasse du moteur (20) et ayant un élément de filtrage (39) pour filtrer l'air, et un conduit d'air (38) pour attirer l'air d'une ouverture (18c) formée dans une partie avant du véhicule de type monté à califourchon pour introduire l'air dans le filtre à air ; et
**caractérisé en ce que**
les pièces dans le véhicule comprennent des pièces électriques (43 - 45) disposées au-dessus du filtre à air (37) avec un espacement (S3) défini entre les pièces électriques (43 - 45) et le filtre à air (37), dans lequel le système de refroidissement de pièces est construit pour amener l'air en déviation à s'écouler à travers l'espacement (S3) entre le filtre à air (37) et les pièces électriques (43 - 45).

2. Véhicule de type monté à califourchon selon la revendication 1, **caractérisé en ce que** le système de refroidissement de pièces comprend un orifice d'air en déviation (37d), qui s'ouvre sur un canal d'écoulement d'air de refroidissement (A, B) pour guider l'air dévié du système d'admission du moteur (20) vers les pièces dans le véhicule à refroidir.

3. Véhicule de type monté à califourchon selon la revendication 1 ou 2, **caractérisé en ce que** le système de refroidissement de pièces est configuré pour dévier l'air au niveau du côté en amont de l'élément de filtrage (39).

4. Véhicule de type monté à califourchon selon l'une des revendications 1 à 3, **caractérisé par** un couvercle (17) pour recouvrir le filtre à air (37) par dessus, dans lequel le système de refroidissement de pièces est construit pour amener l'air en déviation à s'écouler entre le filtre à air (37) et le couvercle (17).

5. Véhicule de type monté à califourchon selon la revendication 4, **caractérisé en ce que** les pièces dans le véhicule comprennent les pièces électriques (43 - 45) disposées au-dessus du filtre à air (37) avec l'espacement (S3) défini entre les pièces électriques (43 - 45) et le filtre à air (37), dans lequel le couvercle (17) pour recouvrir les pièces électriques (43 - 45) et le filtre à air (37) par dessus comprend au moins un orifice d'évacuation d'air (17a) formé à l'intérieur de celui-ci, et dans lequel le système de refroidissement de pièces est construit pour amener l'air en déviation à s'écouler vers l'arrière à travers l'espacement (S3) entre le filtre à air (37) et les pièces électriques (43 - 45), puis à s'écouler vers l'avant à travers l'espacement (S2) entre les pièces électriques (43 - 45) et le couvercle (17) pour sortir de l'au moins un orifice d'évacuation d'air (17a).

6. Véhicule de type monté à califourchon selon l'une des revendications 1 à 5, **caractérisé en ce qu'**il comprend en outre : un réservoir de carburant (15) disposé à l'arrière du système d'admission et au-dessus du moteur (20) ; et un générateur électrique (30) disposé à l'arrière du moteur (20) à l'opposé du réservoir de carburant (15), dans lequel le système de refroidissement de pièces est construit pour amener l'air en déviation à s'écouler à travers un espacement (S1) formé entre le réservoir de carburant (15) et le moteur (20), puis à s'écouler au voisinage du générateur électrique (30).

7. Véhicule de type monté à califourchon selon l'une des revendications 3 à 5, **caractérisé en ce que** le châssis de carrosserie a un tuyau de tête (3a) supportant une fourche avant, et des rails de réservoir gauche et droit (3, 3) connectés au tuyau de tête (3a), dans lequel le conduit d'air (38) dans le système d'admission du moteur (20) connectant l'ouverture (18c) à la partie avant du véhicule de type monté à califourchon au filtre à air (37) est disposé pour traverser un trou de conduit pénétrant la portion de connexion du tuyau de tête et des rails de réservoir (3, 3).

8. Véhicule de type monté à califourchon selon l'une des revendications 3 à 7, **caractérisé en ce que** le moteur est un moteur à plusieurs cylindres, le système d'admission est disposé pour connecter le filtre à air au moteur, un corps de papillon contenant un papillon des gaz est fourni respectivement pour chaque cylindre, et le système de refroidissement de pièces est construit pour amener l'air en déviation à s'écouler à travers chaque espacement défini entre les corps de papillon.
